# EUROPÄISCHE PATENTSCHRIFT

(11) **EP 3 078 884 B1**
(45) Veröffentlichungstag und Bekanntmachung des Hinweises auf die Patenterteilung: **06.11.2019**
(21) Anmeldenummer: 16162603.1
(22) Anmeldetag: 29.03.2016
(51) Int. Cl.: F16J 15/02, F16L 25/00, E02D 29/00, F16L 21/03, F16L 21/035

(54) **INTEGRIERTE DICHTUNG MIT SCHERKRAFT-STÜTZSCHULTER**
INTEGRATED SEAL WITH SHEAR FORCE SUPPORT SHOULDER
JOINT INTEGRE COMPRENANT UN EPAULEMENT DE FORCE DE CISAILLEMENT

(30) Priorität: 09.04.2015 DE 202015101734 U
(43) Veröffentlichungstag der Anmeldung: 12.10.2016
(73) Patentinhaber: Theodor Cordes GmbH & Co. KG, 48308 Senden-Bösensell (DE)
(72) Erfinder: Schlautmann, Frank, 48167 Münster (DE); Höft, Heiko, 21357 Barum (DE)
(74) Vertreter: Habbel, Ludwig

(56) Entgegenhaltungen:
- EP-A1- 1 837 576
- EP-A1- 2 703 706
- EP-B1- 0 890 772
- DE-C1- 4 237 645
- DE-U1-202007 015 375
- DE-U1-202013 003 947

## Beschreibung

Die Erfindung betrifft eine integrierte Dichtung.

Aus der EP 0 890 772 B1 ist eine integrierte Dichtung bekannt.

Integrierte Dichtungen werden in ein Muffenende eines üblicherweise aus Beton bestehenden Rohres integriert, indem sie nach außen ragende Verankerungsvorsprünge aufweisen. Als äußere Seite der Dichtung wird dabei die Seite bzw. die Oberfläche der Dichtung bezeichnet, die radial nach außen weist. Mit der gegenüberliegenden inneren Seite werden die integrierten Dichtungen zunächst auf einen Stahlring, die so genannte Untermuffe, aufgezogen. Die Untermuffe befindet sich dabei in einer Schalung. Anschließend wird die Schalung mit Beton ausgegossen, so dass der fließfähige Beton die Verankerungsvorsprünge umströmt und so die Dichtung formschlüssig im Betonwerkstoff des Rohres gehalten wird. Nach Erstarrung des Betons wir die Schalung entfernt und das Betonrohr kann von und der Untermuffe entfernt werden, wobei die integrierte Dichtung dann im Inneren der Muffe verbleibt. Sie dient dazu, ein in die Muffe eingeschobenes Spitzende eines benachbarten, gleichartigen Betonrohres aufzunehmen und den Spalt zwischen dem Spitzende und der Muffe abzudichten.

In der Praxis kann insbesondere bei älteren Rohrleitungen, deren Betonrohre über mehrere Jahre im Erdreich gelegen haben, das Problem auftreten, dass das Erdreich unterhalb eines Betonrohrs nachgibt bzw. verdichtet wird, so dass dieses Betonrohr sich setzt, also nach unten absenkt. Das Spitzende dieses Betonrohrs wird in der Muffe, in welcher es sich befindet, bzw. im Übergangsbereich zu dieser Muffe auf Scherung belastet. Dabei wird die Dichtung, in welcher das Spitzende aufgenommen ist, ungleichmäßig belastet, nämlich im Wesentlichen in ihrem unteren Umfangsabschnitt. In einzelnen Fällen kann dies dazu führen, dass die Dichtung so stark komprimiert wird, dass an der gegenüberliegenden, oberen Stelle des Dichtungsverlaufs die Dichtheit zwischen der Muffe und dem in die Muffe eingeschobenen Spitzende nicht mehr gewährleistet ist.

Aus der DE 20 2013 003 947 U1 ist ein Dichtring und eine Steckmuffenverbindung für den Kanalbau bekannt, wobei der Dichtring einen Hohlraum aufweist, der mit einer inkompressiblen Füllung gefüllt ist, um eine Lastverteilung bei vertikal übereinander angeordneten Rohren eines Schachtbauwerks zu ermöglichen. Die inkompressible Füllung begrenzt die Komprimierbarkeit des Dichtrings in axialer Richtung, bei einem Schachtbauwerk also in vertikaler Richtung. In radialer Richtung, bei einem Schachtbauwerk also in horizontaler Richtung, begrenzt die inkompressible Füllung die Komprimierbarkeit des Dichtrings nicht.

Aus der DE 20 2007 015 375 U1 ist eine integrierte Dichtung bekannt, insbesondere für Betonrohre, die wenigstens einen eingebetteten Faden aufweist. Hierdurch soll eine unerwünschte Dehnung der Dichtung vermieden werden, wenn diese auf eine Untermuffe aufgezogen ist, so dass mittels des Fadens vermieden werden soll, dass die Dichtung auf der Untermuffe verrutscht.

Aus der EP 1 837 576 A1 ist eine Einrichtung zur Herstellung einer Dichtanordnung für Rohre und Schachtbauwerke bekannt, bei welcher eine Dichtung ähnlich der Dichtung Anwendung finden kann, wie sie in der oben genannten DE 20 2007 015 375 U1 beschrieben ist, allerdings ohne den dort vorgesehenen eingebetteten Faden.

Aus der EP 2 703 706 A1 ist eine integrierte Dichtung bekannt, die im Querschnitt zwei unterschiedliche Werkstoffe aufweist. Der Bereich der Dichtung, welcher Verankerungsvorsprünge an der äußeren Seite der Dichtung aufweist, besteht dabei aus einem härteren Werkstoff als der Bereich der Dichtung, welcher radial innen dichtungswirksam zur Anlage am Spitzende eines benachbarten Rohrs dient.

Der Erfindung liegt die Aufgabe zugrunde, eine gattungsgemäße integrierte Dichtung dahingehend zu verbessern, dass diese eine wirtschaftliche Fertigung des mit ihr versehenen Rohres ermöglicht, und dass auch bei Scherbewegungen eines von der integrierten Dichtung aufgenommenen Spitzendes die Dichtwirkung der Dichtung sichergestellt ist.

Diese Aufgabe wird durch eine integrierte Dichtung mit den Merkmalen des Anspruchs 1 gelöst. Vorteilhafte Ausgestaltungen sind in den Unteransprüchen beschrieben.

Die Erfindung schlägt mit anderen Worten folgende Maßnahmen vor: Zunächst ist vorgesehen, dass die den Verankerungsvorsprüngen gegenüberliegende Seite im Querschnitt der Dichtung, also die so genannte innere Seite, geradlinig verläuft. So wird eine Anlagelinie beschrieben, die Teil einer ringförmigen Anlagefläche ist, mit welcher die Dichtung der Untermuffe während der Produktion des Betonrohrs anliegt. Dieser Vorschlag geht von der Überlegung aus, dass es einen in der Praxis weit verbreiteten Quasi-Standard gibt, nach welchem die Untermuffen gefertigt werden, und dass die innere Seite der Dichtung stets an die Formgebung der Untermuffe angepasst sein muss, um eine problemlose Produktion des Betonrohres zu ermöglichen. Um die integrierte Dichtung bei der Produktion zunächst auf die Untermuffe aufziehen zu können, ist es daher vorteilhaft, wenn die Dichtung einen radial inneren glatten Verlauf aufweist, so dass sie der Untermuffe des außen glatten, weit verbreiteten Typs zuverlässig dicht anliegen kann und keine speziell geformte Untermuffe benötigt. Wirtschaftlich vorteilhaft können somit die in den Betrieben ohnehin vorhandenen Untermuffen für die Verarbeitung der vorschlagsgemäßen integrierten Dichtung verwendet werden. Als geradliniger Verlauf der Anlagelinie wird im Rahmen des vorliegenden Vorschlags auch verstanden, dass diese innere Seite der Dichtung eine Oberflächenrauhigkeit oder eine Oberflächenprofilierung aufweist, z.B. einen sägezahnartigen Verlauf, wo die Anlagelinie vorgesehen ist, sofern die Enden der entsprechenden Profilierungsvorsprünge auf einer geraden Linie liegen. Auch mit einer derartigen Oberflächenprofilierung wird nämlich das Ziel erreicht, dass die Dichtung auf eine übliche, quasi standardisierte Untermuffe aufgezogen werden kann.

Weiterhin ist vorschlagsgemäß vorgesehen, dass die Dichtung in ihrem Querschnittsverlauf hinter dem Dichtungsabschnitt eine Stützschulter aufweist. Als vorne ist im Rahmen des vorliegenden Vorschlags die Richtung bezeichnet, aus welcher das Spitzende eines benachbarten Betonrohrs an die Dichtung herangeführt wird. Als hinten wird dementsprechend die entgegengesetzte Richtung bezeichnet, die tiefer in das Rohr hinein weist, an dessen Muffe sich die Dichtung befindet.

Die erwähnte Stützschulter erstreckt sich radial von außen nach innen. Bei der Herstellung der Rohrverbindung bedeutet dies, dass das Spitzende zunächst gegen den vorn angeordneten Dichtungsabschnitt der integrierten Dichtung geführt wird und anschließend in den weiter hinten angeordneten Abschnitt der integrierten Dichtung eingeführt wird, der den radial nach innen ragenden Vorsprung in Form der Stützschulter aufweist. Sollte sich das Spitzende im Laufe der Zeit gegenüber der Muffe absenken, so führt dies vorschlagsgemäß nicht zu einer vollständigen Kompression der Dichtung, sondern vielmehr liegt das Spitzende vorher auf der Stützschulter auf. Dadurch, dass diese radiale Absenkbewegung des Spitzendes durch die Stützschulter begrenzt wird, wird einerseits sichergestellt, dass im oberen Umfangsabschnitt der Dichtung das Spitzende nicht außer Kontakt mit der Dichtung geraten kann, die Dichtheit der Rohrverbindung also nach wie vor stets gewahrt bleibt. Im unteren Bereich der Rohrverbindung wird ebenfalls eine optimale Dichtwirkung dadurch sichergestellt, dass durch die Auflage auf der Stützschulter das Spitzende die Dichtung in ihrem unteren Umfangsabschnitt nicht vollständig komprimieren kann, so dass eine Beweglichkeit der Dichtung auch in ihrem unteren Umfangsabschnitt sichergestellt ist, zu Gunsten der Dichtwirkung der Dichtung.

Dabei ist vorschlagsgemäß vorgesehen, dass sich die Stützschulter so weit nach innen erstreckt, dass sie eine Verpressung des Dichtungsabschnitts derart begrenzt, dass die Dichtung anschließend mindestens 40 % ihrer ursprünglichen Höhe aufweist.

Schließlich ist vorschlagsgemäß vorgesehen, dass eine Belastung des Spitzendes, wenn es sich bis auf die Stützschulter abgesenkt haben sollte, vermieden wird, welche durch ein punktuelles bzw. linienförmiges Auflager nicht auszuschließen wäre. Um eine vergleichsweise großflächige und somit das Betonmaterial schonende Auflage des Spitzendes auf der Stützschulter sicherzustellen, ist vorschlagsgemäß vorgesehen, dass die Stützschulter sich in Längsrichtung der Dichtung über wenigstens 25 % der Länge der Dichtung erstreckt, vorteilhaft sogar über einen Wert von etwa 50 % der Dichtungslänge.

Vorteilhaft kann zwischen dem Dichtungsabschnitt und der Stützschulter wenigstens eine Hohlkammer angeordnet sein, um eine einerseits dichte Anlage der Dichtung an dem Spitzende sicherzustellen, andererseits jedoch eine Beweglichkeit des Spitzendes in der Muffe, in welcher die Dichtung angeordnet ist, zu ermöglichen, beispielsweise durch einen Parallelversatz zwischen den beiden benachbarten Rohren oder auch durch einen Winkelversatz zwischen den beiden Rohren.

Vorteilhaft kann innen von der Stützschulter wenigstens eine Hohlkammer angeordnet sein, mit denselben wie vorstehend erläuterten Vorteilen, nämlich um einerseits eine Anlage der Dichtung an dem Spitzende, andererseits jedoch auch eine Beweglichkeit des Spitzendes innerhalb der Dichtung bzw. innerhalb der Muffe zu ermöglichen.

Vorteilhaft kann die äußere Seite der Dichtung von vorn, also vom Dichtungsabschnitt, nach hinten stufig ansteigen, wobei die Stützschulter hinter der Stufe angeordnet ist. Auf diese Weise wird eine stabile Ausgestaltung der Stützschulter dadurch ermöglicht, dass bei der Produktion des Betonrohrs der Beton diesen stufenförmigen Versatz ausfüllt und letztlich in dem Profilverlauf des Betons selbst eine Stützschulter angelegt ist, wobei die Dichtung, die in an sich bekannter Weise aus einem Elastomerwerkstoff besteht, zwischen dieser betonierten, radial nach innen ragenden Stufe der Muffe und dem Spitzende angeordnet ist, so dass auch hierdurch punktuelle Belastungen vermieden und durch den Dichtungswerkstoff verteilt bzw. ausgeglichen werden.

Alternativ dazu oder auch ergänzend damit kann die Stützschulter innerhalb einer oder mehrerer Hohlkammern verlaufen. Auf diese Weise kann beispielsweise ein herkömmliches, für die Herstellung einer integrierten Dichtung verwendetes Dichtungsprofil entweder nahezu unverändert verwendet werden, indem nämlich lediglich das zur Herstellung der Dichtung verwendete Werkzeug geringfügig abgeändert zu werden braucht, wo es die Hohlkammern bildet, oder es kann sogar eine herkömmliche Dichtung unverändert verwendet werden und zusätzliches Material, ggf. sogar in Form eines unterschiedlichen Werkstoffs, nachträglich in die Hohlkammer bzw. in die mehreren Hohlkammern der Dichtung eingebracht werden, um auf diese Weise die Komprimierbarkeit der Dichtung im Bereich der Hohlkammern zu begrenzen und somit die vorschlagsgemäße Stützschulter zu schaffen.

Vorteilhaft können in axialer Richtung der Dichtung mehrere Hohlkammern hintereinander angeordnet sein, wobei die einzelnen Hohlkammern durch Stege voneinander getrennt sind. Dabei kann zur Bildung oder zur Unterstützung des Stützabschnitts vorgesehen sein, dass wenigstens ein Steg zweiteilig ausgestaltet ist, also über seine Höhe in zwei unterschiedliche Anteile getrennt ist. Der äußere Abschnitt und der innere Abschnitt dieses geteilten Stegs sind dabei gegeneinander beweglich. Wenn das Spitzende in die Muffe des korrespondierenden Rohrs eingeschoben wird, wird die integrierte Dichtung verformt. An ihrem äußeren Umfang ist die Dichtung durch die Verankerungsabschnitte ortsfest in der Muffe gehalten. Die radial innere Oberfläche der integrierten Dichtung kann demgegenüber jedoch zusammen mit dem Spitzende in axialer Richtung verschoben werden. Bei dieser Bewegung wird der innere Abschnitt des zweiteiligen Stegs gegenüber dem ortsfest verbleibenden äußeren Abschnitt nach hinten verschoben. Bei einer späteren Absenkbewegung des Spitzendes und einer dementsprechenden Komprimierung des Stützabschnitts der Dichtung wird daher entweder der nach hinten verschobene innere Steg in der benachbarten Hohlkammer nach außen bewegt werden oder der ortsfest verbleibende äußere Abschnitt des Stegs wird, wenn sich die innere Seite der Dichtung absenkt, von innen gegen diese äußere Seite stoßen oder es werden gleichzeitig beide Abschnitte des Steges an die jeweils gegenüberliegende Seite der Dichtung stoßen, je nachdem, wie hoch die beiden einzelnen Abschnitte des Stegs ausgestaltet sind.

Vorteilhaft kann sich die Stützschulter so weit nach innen erstrecken, dass sie eine Verformung des Dichtungsabschnitts in radialer Richtung von maximal 50 % seiner ursprünglichen Höhe begrenzt, also sicherstellt, dass der Dichtungsabschnitt auch bei maximaler Absenkung des Spitzendes nach wie vor eine Höhe von wenigstens 50 % seiner ursprünglichen Höhe beibehält.

Vorteilhaft kann die Dichtung durchgängig aus einem einzigen Werkstoff bestehen, nämlich aus dem Material, welches im Dichtungsabschnitt der Dichtung für die Dichtwirkung maßgeblich ist, so dass ein vergleichsweise weicher Werkstoff verwendet wird. Dies erleichtert die Handhabung bei der Montage der Dichtung auf der Untermuffe.

Alternativ dazu kann in bekannter Weise vorteilhaft sein, den Dichtungsabschnitt aus einem weicheren Werkstoff zu wählen als den Stützabschnitt der integrierten Dichtung. Durch diese zweikomponentige Ausgestaltung der integrierten Dichtung wird eine hervorragende Dichtwirkung durch den weicheren Werkstoff im Dichtungsabschnitt und anderseits eine gute Formbeständigkeit der Dichtung insbesondere im Bereich der Stützschulter dadurch sichergestellt, dass in diesem Stützabschnitt der Dichtung der verwendete Werkstoff etwas härter ist als im Dichtungsabschnitt.

Die Stützschulter kann vorteilhaft derart ausgebildet sein, dass bei einer Abwinklung der gefügten Rohre die Kontur der Stützschulter weitestgehend der Linie folgt, die sich durch die Abwinklung des Spitzendes beschrieben wird. Dieser Vorschlag geht von der Überlegung aus, dass die Spitzenden der Betonrohre in der Praxis ebenso quasi standardisiert hergestellt werden, wie dies weiter oben auch für die Untermuffen beschrieben wurde. Die typische Kontur an der Rohr-Außenseite eines Spitzendes sieht beispielsweise zunächst einen Radius von 15 mm vor, anschließend eine Schräge von 15° und anschließend eine Schräge von 2°. Abwinklungen zweier benachbarter Betonrohre zueinander können in sämtlichen Winkelrichtungen auftreten und sind bis zu einer Abwinklung von 3° zulässig. Der für die Belastung des Dichtungsabschnitts nachteiligste Fall einer Abwinklung besteht darin, dass eines oder beide der voneinander entfernten Enden der beiden Betonrohre gegenüber der Fügestelle, wo sich die Dichtung befindet, nach unten abgesenkt ist. Bei dieser Art der Abwinklung wird der Dichtungsabschnitt der Dichtung nämlich bereits stärker verpresst, ohne dass sich das Spitzende bereits abgesenkt hätte. Die Stützwirkung der Stützschulter kann für einen solchen Fall optimiert werden, indem die Stützschulter eine zum Spitzende gerichtete Kontur aufweist, die der Außenkontur eines dementsprechend abgewinkelten Spitzendes entspricht bzw. immerhin weitgehend entspricht.

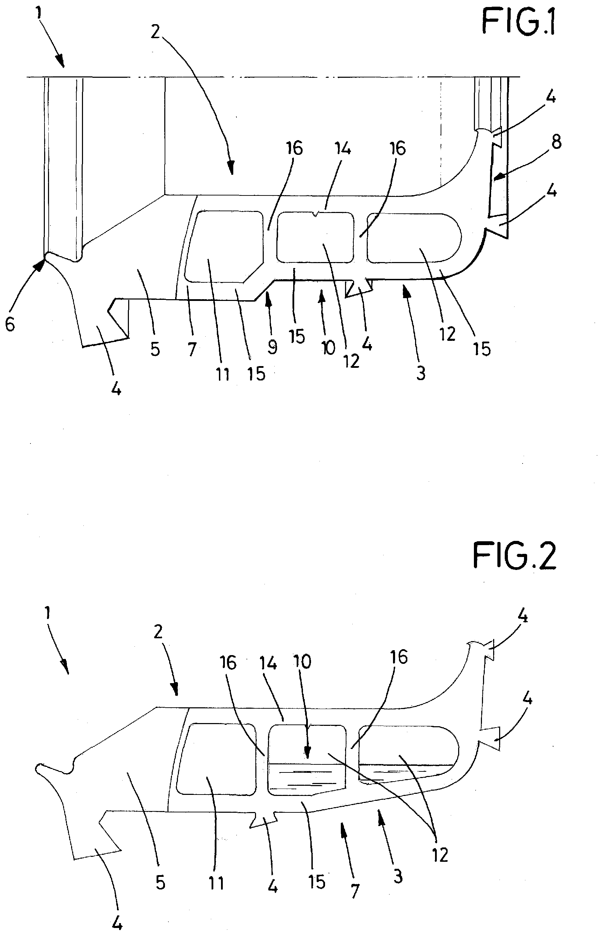

Vorteilhafte Ausgestaltungen der Erfindung werden anhand der rein schematischen Darstellungen nachfolgend näher erläutert. Dabei zeigen die
- Fig. 1 bis 3: unterschiedliche Ausführungsbeispiele integrierter Dichtungen.

In Fig. 1 ist eine integrierte Dichtung 1 dargestellt, wobei die insgesamt ringförmig verlaufende Dichtung 1 in ihrem untersten Punkt in axialer Richtung geschnitten dargestellt ist.

In radialer Richtung bildet also die in Fig. 1 obere Seite des dargestellten Querschnittsprofils eine innere Seite der Dichtung 1, während die gegenüberliegende, in Fig. 1 unten dargestellte Seite eine äußere Seite 3 der Dichtung 1 bildet. Entlang der äußeren Seite 3 sind Verankerungsvorsprünge 4 vorgesehen, die formschlüssig vom Beton umschlossen werden, wenn die Dichtung 1 mit ihrer inneren Seite 2 auf eine Untermuffe aufgezogen und in einem Formhohlraum angeordnet ist, der mit Beton gefüllt wird.

Die in Fig. 1 aufrechte Richtung stellt für die Dichtung 1 die radiale Richtung der Dichtung dar, während in Fig. 1 die horizontale Richtung die axiale Richtung für die Dichtung 1 darstellt, in welcher beispielsweise eine Mittelachse verläuft, um welche die insgesamt ringförmige Dichtung 1 herum verläuft und die auch die Mittelachse eines Rohres bildet, in dessen Muffe die Dichtung 1 angeordnet ist, sowie die Mittelachse eines benachbarten Rohres, dessen Spitzende in die Muffe und damit in die Dichtung 1 eingeschoben wird.

In axialer Richtung bildet die Dichtung 1 einen Dichtungsabschnitt 5 aus einem vergleichsweise weicheren Werkstoff, der ein vorderes Ende 6 der Dichtung 1 bildet. Hinter dem Dichtungsabschnitt 5 ist ein Stützabschnitt 7 vorgesehen, der sich bis zu einem hinteren Ende 8 der Dichtung erstreckt, über welches dann in axialer Richtung lediglich noch Verankerungsvorsprünge 4 hinausragen.

Während die innere Seite 2 glatt verläuft, weist die äußere Seite 3 der Dichtung 1 im Bereich des Stützabschnitts 7 eine Stufe 9 auf, wobei in axialer Richtung hinter der Stufe 9 eine Stützschulter 10 geschaffen wird.

Innerhalb des Stützabschnitts 7 weist die Dichtung 1 drei Hohlkammern 11 und 12 auf, wobei die erste Hohlkammer 11 sich über eine größere Höhe erstreckt und vor der Stufe 9 angeordnet ist, während die beiden Hohlkammern 12 hinter der Stufe 9 angeordnet sind und sich über eine geringere Höhe als die Hohlkammer 11 erstrecken.

Wenn bei einer radial nach außen wirkenden Kraft der Querschnitt der Dichtung 1 komprimiert wird, wird eine innere Wand, die radial innen von den Hohlkammern 11 und 12 vorgesehen ist, nach außen, also in Richtung zu einer äußeren Wand 15 bewegt, die radial außen von den Hohlkammern 11 und 12 angeordnet ist. Stege 16, welche die Hohlkammern 11 und 12 voneinander trennen, werden dabei verformt. Wenn die innere Wand 14 soweit wie möglich, also bis auf Block, nach außen verlagert worden ist und der Dichtungsabschnitt 5 in gleichem Maße komprimiert worden ist, ist durch die vorschlagsgemäße Ausgestaltung der Dichtung 1 sichergestellt, dass der Dichtungsabschnitt 5 immer noch wenigstens 50 % seiner ursprünglichen Höhe aufweist, also um ein Maß von maximal 50 % verpresst worden ist.

Fig. 2 zeigt ein zweites Ausführungsbeispiel, bei dem von der Dichtung 1 lediglich das Querschnittsprofil dargestellt ist. Dieses Ausführungsbeispiel weist an seiner äußeren Seite 3 keine Stufe 9 auf. Vielmehr wird die Stützschulter 10 dadurch geschaffen, dass sich eine erste Hohlkammer, nämlich die vordere Hohlkammer 11, weiter nach außen erstreckt als die beiden anderen Hohlkammern 12. Im Unterschied zu Fig. 1 ist jedoch keine Stufe 9 in der äußeren Seite 3 geschaffen, sondern vielmehr ist die äußere Wand 15 im Bereich der beiden hinteren Hohlkammern 12 erheblich dicker als im Bereich der vorderen Hohlkammer 11.

Im Vergleich zur Ausgestaltung der Hohlkammern 11 und 12 von Fig. 1 wird also die Stützschulter bei Fig. 2 praktisch dadurch geschaffen, dass zusätzliches Material in den beiden hinteren Hohlkammern 12 vorgesehen ist. Dies kann abweichend von dem dargestellten Ausführungsbeispiel der Fig. 2 beispielsweise auch dadurch erfolgen, dass tatsächlich zusätzliches, nämlich separates Material in die beiden Hohlkammern 12 eingeführt wird, beispielsweise in Form von Profilleisten, um die verbleibenden Hohlräume in den Hohlkammern 12 so auszugestalten wie in Fig. 2 dargestellt.

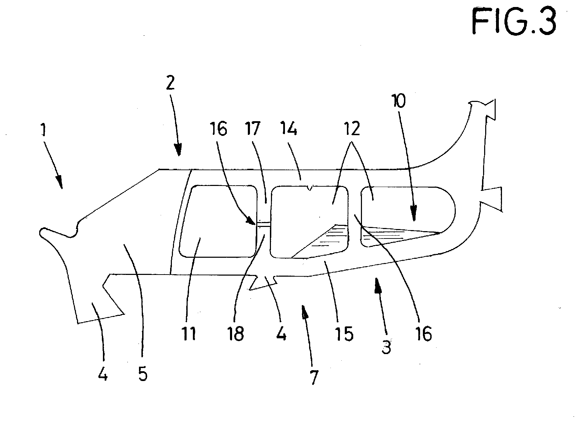

Fig. 3 zeigt ähnlich wie Fig. 2 lediglich das Querschnittsprofil der Dichtung 1, und auch hier verläuft die äußere Seite 3 ohne eine Stufe entsprechend der Stufe 9 von Fig. 1. Auch hier ist der innere Hohlraum der beiden hinteren Hohlkammern 12 kleiner als bei der vorderen Hohlkammer 11. Anders als bei Fig. 2 weist die mittlere Hohlkammer 12 jedoch einen Verlauf auf, der sich zu dem Steg 16 hin erweitert, welche die vordere Hohlkammer 11 von dieser mittleren Hohlkammer 12 trennt.

Dieser betreffende Steg 16 ist in einen oberen Abschnitt 17 und einen unteren Abschnitt 18 getrennt. Wenn ein Spitzende in die Dichtung 1 eingeschoben wird, wird die innere Seite 2 der Dichtung 1 nach hinten verlagert, so dass der obere Abschnitt 17 hinter den unteren Abschnitt 18 dieses vordersten der beiden Stege 16 gerät. Sollte sich später dieses Spitzende absenken und dabei die innere Seite bzw. die innere Wand 14 nach unten, zur äußeren Wand 15 hin verlagern, so stützt sich der obere Abschnitt 17 auf der äußeren Wand 15 innerhalb der mittleren Hohlkammer 12 ab, und der untere Abschnitt 18 stützt die innere Wand 14 im Bereich der vorderen Hohlkammer 11, wenn sich diese innere Wand 14 entsprechend weit abgesenkt hat.

## Patentansprüche

1. Integrierte Dichtung (1),
die ringförmig um eine Mittelachse verläuft
und deren Querschnitt folgende Merkmale aufweist:
einen Dichtungsabschnitt (5), der an einem ersten, so genannten vorderen Ende (6) der Dichtung (1) angeordnet ist,
und einen Stützabschnitt (7), der hinter dem Dichtungsabschnitt (5) angeordnet ist,
eine Hohlkammer (11, 12) im Stützabschnitt (7),
sowie Verankerungsvorsprünge (4), die an einer äußeren Seite (3) der Dichtung (1) angeordnet sind,
**dadurch gekennzeichnet,**
**dass** die Dichtung (1) in ein einen Abschnitt einer Rohrleitung bildendes Rohr integrierbar ist,
und der Querschnitt der Dichtung (1) folgende weiteren Merkmale aufweist:
eine Höhe, die in radialer Richtung zu der Mittelachse verläuft,
eine Länge, die in Richtung der Mittelachse verläuft und die den Verankerungsvorsprüngen (4) gegenüberliegende innere Seite (2) beschreibt eine geradlinig verlaufende Anlagelinie,
und **dass** die Dichtung (1) hinter dem Dichtungsabschnitt (5) eine Stützschulter (10) aufweist, die sich von der äußeren Seite (3) nach innen erstreckt, derart, dass der Dichtungsabschnitt (5) weiter nach außen ragt als die Stützschulter (10),
wobei sich die Stützschulter (10) so weit nach innen erstreckt, dass sie unter nach außen wirkender Belastung eine Verpressung des Dichtungsabschnitts (5) in radialer Richtung auf einen Wert von höchstens 40% seiner ursprünglichen Höhe begrenzt,
und **dass** sich die Stützschulter (10) wenigstens über 25% der Länge der Dichtung (1) erstreckt.

2. Dichtung nach Anspruch 1,
**dadurch gekennzeichnet,**
**dass** zwischen dem Dichtungsabschnitt (5) und der Stützschulter (7) eine Hohlkammer (11) angeordnet ist.

3. Dichtung nach Anspruch 1 oder 2,
**dadurch gekennzeichnet,**
**dass** innen von der der Stützschulter (10) eine Hohlkammer (12) angeordnet ist.

4. Dichtung nach einem der vorhergehenden Ansprüche,
**dadurch gekennzeichnet,**
**dass** die äußere Seite (3) von vorn nach hinten stufig ansteigend verläuft,
wobei die Stützschulter (10) hinter der Stufe (9) angeordnet ist.

5. Dichtung nach einem der vorhergehenden Ansprüche,
**dadurch gekennzeichnet,**
**dass** mehrere Hohlkammern (11, 12) vorgesehen sind, von denen wenigstens eine erste Hohlkammer (11) sich weiter nach außen erstreckt als eine zweite Hohlkammer (12).

6. Dichtung nach einem der vorhergehenden Ansprüche,
**dadurch gekennzeichnet,**
**dass** die Dichtung (1) mehrere hintereinander angeordnete Hohlkammern (11, 12) aufweist,
die durch Stege (16) voneinander getrennt sind, wobei ein Steg (16) zweiteilig ausgestaltet ist, derart, dass er einen inneren Abschnitt (17) und einen davon getrennten äußeren Abschnitt (18) aufweist, die gegeneinander beweglich sind.

7. Dichtung nach einem der vorhergehenden Ansprüche,
**dadurch gekennzeichnet,**
**dass** sich die Stützschulter (10) so weit nach innen erstreckt, dass sie unter nach außen wirkender Belastung eine Verpressung des Dichtungsabschnitts (5) in radialer Richtung auf einen Wert von höchstens 50% seiner ursprünglichen Höhe begrenzt.

8. Dichtung nach einem der vorhergehenden Ansprüche,
**dadurch gekennzeichnet,**
**dass** die Dichtung (1) durchgängig aus einem einzigen Werkstoff besteht.

9. Dichtung nach einem der Ansprüche 1 bis 7,
**dadurch gekennzeichnet,**
**dass** der Dichtungsabschnitt (5) aus einem weicheren Werkstoff besteht als der Stützabschnitt (7).

10. Dichtung nach einem der vorhergehenden Ansprüche,
**dadurch gekennzeichnet,**
**dass** die Stützschulter (10) einen Konturverlauf aufweist, welcher der Linie folgt, die von der Kontur des Spitzendes bei zwei ineinander gefügten gleichartigen Betonrohren und einer Abwinklung des Spitzendes um 3° gegenüber dem Muffenende beschrieben wird.

## Claims

1. Integrated seal (1) that extends ringwise around a central axis and has a cross-section having the following features: a sealing section (5) that is disposed at a first, so-called front end (6) of the seal (1) and a support section (7) that is disposed behind the sealing section (5) and a hollow chamber (11, 12) in the support section (7) as well as fastening projections (4) that are disposed on an outer side (3) of the seal (1),
**characterised in that** the seal (1) can be integrated into a pipe forming part of a pipework and that the cross-section of the seal (1) has the following features:
a height that extends in a radial direction relative to the central axis and a length that extends in the direction of the central axis and the inner side (2) opposite the fastening projections (4) describes a contact line that extends in a straight line,
and **in that** the seal (1) incorporates behind the sealing section (5) a support shoulder (10) that extends from the outer side (3) inwards,
such that the sealing section (5) protrudes further outwards than the support shoulder (10),
where the support shoulder (10) extends so far inwards that, when subjected to a load acting outwards, it limits compression of the sealing section (5) in a radial direction to a maximum of 40 % of its original height,
and **in that** the support shoulder (10) extends along at least 25 % of the length of the seal (1).

2. Seal in accordance with claim 1, **characterised in that** a hollow chamber (11) is disposed between the sealing section (5) and the support shoulder (10).

3. Seal in accordance with claim 1 or 2, **characterised in that** a hollow chamber (12) is disposed inside the support shoulder (10).

4. Seal in accordance with any one of the foregoing claims, **characterised in that** the outer side (3) extends stepwise upwards from front to rear, the support shoulder (10) being disposed behind the step (9).

5. Seal in accordance with any one of the foregoing claims, **characterised in that** a number of hollow chambers (11, 12) is provided for of which at least a first hollow chamber (11) extends further outwards than a second hollow chamber (12).

6. Seal in accordance with any one of the foregoing claims, **characterised in that** the seal (1) incorporates a number of hollow chambers (11, 12) that are disposed one behind the other and are separated from one another by webs (16), where a web (16) is configured in two parts such that it incorporates an inner section (17) and an outer section (18) separated from the inner section (17) such that these sections can be moved relative to each other.

7. Seal in accordance with any one of the foregoing claims, **characterised in that** the support shoulder (10) extends so far inwards that, when subjected to a load acting outwards, it limits compression of the sealing section (5) in a radial direction to a maximum of 50 % of its original height.

8. Seal in accordance with any one of the foregoing claims, **characterised in that** the seal (1) is made from a single material all through.

9. Seal in accordance with any one of claims 1 to 7, **characterised in that** the sealing section (5) is made from a softer material than the support section (7).

10. Seal in accordance with any one of the foregoing claims, **characterised in that** the support shoulder (10) incorporates a contour line that follows the line described by the contour of the spigot end where two concrete pipes of the same kind are inserted one into the other and the spigot end is set at an angle of 3° relative to the socket end.

## Revendications

1. Joint (1) intégré, présentant un tracé annulaire autour d'un axe médian et dont la section présente les particularités suivantes : un segment (5) de joint disposé à une première extrémité du joint (1) dite extrémité avant (6), et un segment d'appui (7) disposé derrière le segment (5) de joint, une chambre creuse (11, 12) dans le segment d'appui (7) ainsi que des saillies d'ancrage (4) disposées contre un côté externe (3) du joint (1),
**caractérisé en ce que** le joint (1) est intégrable dans un conduit formant un segment d'une conduite, et **en ce que** la section du joint (1) présente les particularités complémentaires suivantes :
une hauteur présentant un tracé en direction radiale par rapport à l'axe médian, une longueur présentant un tracé en direction de l'axe médian, et le côté intérieur (2) situé en face des saillies d'ancrage (4) décrit une ligne d'applique au tracé rectiligne,
et **en ce que** le joint (1) présente un épaulement (10) derrière le segment (5) de joint, épaulement qui s'étend du côté extérieur (3) vers l'intérieur,
de sorte que le segment (5) de joint fait saillie vers l'extérieur plus loin que l'épaulement (10),
sachant que l'épaulement (10) s'étend vers l'intérieur au point que sous une contrainte agissant vers l'extérieur, l'épaulement limite une compression du segment (5) de joint dans le sens radial à une valeur de 40 % maximum de sa hauteur d'origine,
et **en ce que** l'épaulement (10) s'étend sur au moins 25 % de la longueur du joint (1).

2. Joint selon la revendication 1, **caractérisé en ce qu'**entre le segment (5) de joint et l'épaulement (10) est disposée une chambre creuse (11).

3. Joint selon la revendication 1 ou 2, **caractérisé en ce qu'**une chambre creuse (12) est disposée à l'intérieur de l'épaulement (10).

4. Joint selon l'une des revendications précédentes, **caractérisé en ce que** le côté extérieur (3) présente d'avant en arrière un tracé montant en gradins, sachant que l'épaulement (10) est disposé derrière le gradin (9).

5. Joint selon l'une des revendications précédentes, **caractérisé en ce que** plusieurs chambres creuses (11, 12) sont prévues, parmi lesquelles au moins une première chambre creuse (11) s'étend plus loin vers l'extérieur qu'une deuxième chambre creuse (12).

6. Joint selon l'une des revendications précédentes, **caractérisé en ce que** le joint (1) présente plusieurs chambres creuses (11, 12) juxtaposées, séparées les unes des autres par des nervures (16), sachant qu'une nervure (16) est configurée en deux parties de sorte qu'elle présente un segment intérieur (17) et un segment extérieur (18) séparé de ce dernier, qui sont déplaçables l'un contre l'autre.

7. Joint selon l'une des revendications précédentes, **caractérisé en ce que** l'épaulement (10) s'étend vers l'intérieur au point de limiter à une valeur de 50 % maximum de sa hauteur d'origine, sous une contrainte agissant vers l'extérieur, une compression du segment (5) de joint en direction radiale.

8. Joint selon l'une des revendications précédentes, **caractérisé en ce que** le joint (1) se compose de part en part d'un seul matériau.

9. Joint selon l'une des revendications 1 à 7, **caractérisé en ce que** le segment (5) de joint est en un matériau plus mou que le segment d'appui (7).

10. Joint selon l'une des revendications précédentes, **caractérisé en ce que** l'épaulement (10) présente un tracé de contour suivant la ligne décrite par le contour de l'extrémité pointue pour deux conduits en béton de même type emboîtés l'un dans l'autres et avec une inclinaison de l'extrémité pointue de 3° par rapport à l'extrémité du manchon.
